# EUROPEAN PATENT APPLICATION

(11) **EP 1 921 697 A1**
(43) Date of publication of application: **14.05.2008**
(21) Application number: 07118493.1
(22) Date of filing: 15.10.2007
(51) Int. Cl.: H01M 2/20, H01M 2/30, H01M 10/42

(54) **Battery pack**

(30) Priority: 24.10.2006 KR 20060103370
(71) Applicant: Samsung SDI Co., Ltd., Suwon-si, Gyeonggi-do (KR)
(72) Inventor: Lee, Seongjoon, Gyeonggi-do (KR); Koh, Seok, Gyeonggi-do (KR)
(74) Representative: Grey, Ian Michael

(57) **Abstract**

A battery pack is disclosed. It includes a bare cell including an electrode assembly including first and second electrode plates and a separator interposed between the first and second electrode plates, a case to house the electrode assembly; an outer case to cover the bare cell and including a recessed portion; and a bottom cap disposed on the recessed portion.

## Description

The present invention relates to a battery pack and more particularly, to a battery pack for housing an electrode assembly.

In general, lithium secondary batteries use non-aqueous electrolytes to avoid a reaction between water and lithium. Examples of such electrolytes include solid polymer electrolytes containing a lithium salt, and liquid electrolytes containing a lithium salt dissociated in an organic solvent. Liquid electrolytes are generally used in lithium metal batteries and lithium ion batteries, and polymer solid electrolytes are generally used in lithium ion polymer batteries.

The lithium ion polymer batteries having the solid electrolytes do not generally experience leakage of an organic electrolyte. In a gel-type lithium ion polymer battery containing an organic electrolyte, it is possible to prevent the leakage of the electrolyte by using a pouch-shaped vessel, instead of a metal can, which is generally used in the lithium ion batteries using the liquid electrolytes.

The pouch-shaped vessel is composed of a multi-layered film of a metal foil layer and a synthetic resin layer that covers the metal foil layer. The use of the pouch-shaped vessel makes it possible to considerably reduce the weight of a battery, as compared to a battery using a metal can. In the pouch-shaped vessel, aluminum is used as a metallic material forming the metal foil layer. A polymer film, provided inside a pouch film, protects the metal foil layer from the electrolyte and also prevents short circuits among a positive electrode, a negative electrode, and electrode tabs.

In order to fabricate a pouch-type lithium secondary battery, a positive electrode plate, a separator, and a negative electrode plate are stacked, to form a stacked structure. The stacked structure can be spirally wound to form an electrode assembly, which is put into a pouch, to form a preliminary package. Upper and lower open ends of the pouch are heat fused to thereby form a pouch-type, bare cell battery.

One or more of the bare cells may be connected to each other. A protection circuit module (PCM) or a positive temperature coefficient (PCT) element can be provided in the bare cell.

A case is disposed around the front, rear, and both sides of the bare cell, and a resin is injected into upper and lower surfaces of the bare cell, which are not covered with the case, to form moldings in a hot-melting method. In this way, the bare cell is insulated from the outside.

In the related art, a resin material is injected around the bottom of the bare cell, so as to surround lower portions of a case covering the bare cell, to form a molding. Therefore, portions of the molding that surround the sides of the case protrude from the case, resulting in an increase in the overall thickness of a battery pack, which makes it difficult to reduce the thickness of a battery.

Further, in the related art, the resin material filled into the bottom of the bare cell is easily detached from the bare cell, since a separate coupling structure between the resin material and the case is not provided in the bottom of the case.

The present invention is directed to solving the above-described drawbacks. Aspects of the present invention provide a battery pack, in which a resin material is filled around a lower part of a bare cell, so as not to surround the lower perimeter of a case, to prevent an increase in the thickness thereof.

Aspects of the invention provide a battery pack capable of preventing a resin material from being detached from a bare cell, by strongly fixing a bottom cover to a lower part of the bare cell.

A battery pack, according to aspects of the invention, includes: an electrode assembly including first and second electrode plates, and a separator interposed between the first and second electrode plates; a bare cell including a case to house the electrode assembly; an outer case to cover the bare cell, and a bottom cap disposed on an end of the outer case. The bottom cover can be a molding formed so as to cover the end of the outer case and contact an end of the bare cell. The bottom cover can have a height or thickness that is equal to, or smaller than, a height or thickness of a side of the outer case.

According to aspects of the invention, a battery pack includes: an electrode assembly including first and second electrode plates, and a separator interposed between the first and second electrode plates; a bare cell including a case to house the electrode assembly; an outer case covering the bare cell, and coupling portions that are formed at an end of the outer case, to couple with a bottom cover that covers the end of the outer case.

In this way, a resin material is filled into step portions formed at the lower circumference of the outer case to form a molding, which makes it possible to stably fix a bottom cover to the outer cover. In addition, since the step portions serve as coupling portions and are formed at the lower parts of the outer case, the resin material forming the bottom cover does not overflow to the side of the outer case, which makes it possible to prevent an increase in the thickness of the battery pack.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
FIG. 1 is a diagram illustrating an assembly of a pouch and an electrode assembly, according to an embodiment of the invention;
FIG. 2 is an exploded perspective view illustrating a battery pack, according to an embodiment of the invention;
FIG. 3A is a perspective view illustrating an assembly of the battery pack and an outer case, according to an embodiment of the invention;
FIG. 3B is a cross-sectional view taken along the line IIIB - IIIB of FIG. 3A
FIG. 4A is a perspective view illustrating a battery pack having a resin molding, according to an embodiment of the invention; and
FIG. 4B is a cross-sectional view taken along the line IVB-IVB of FIG. 4A.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

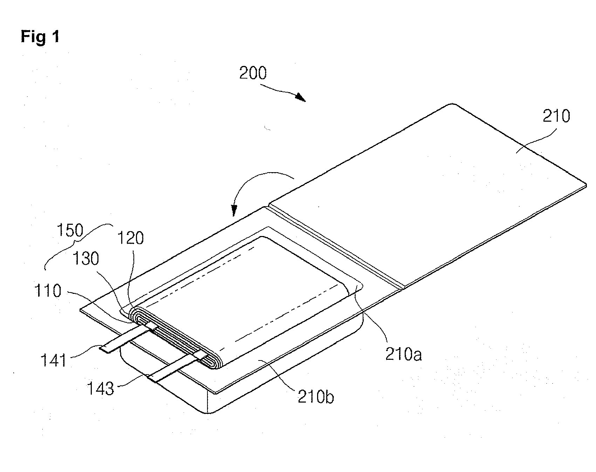

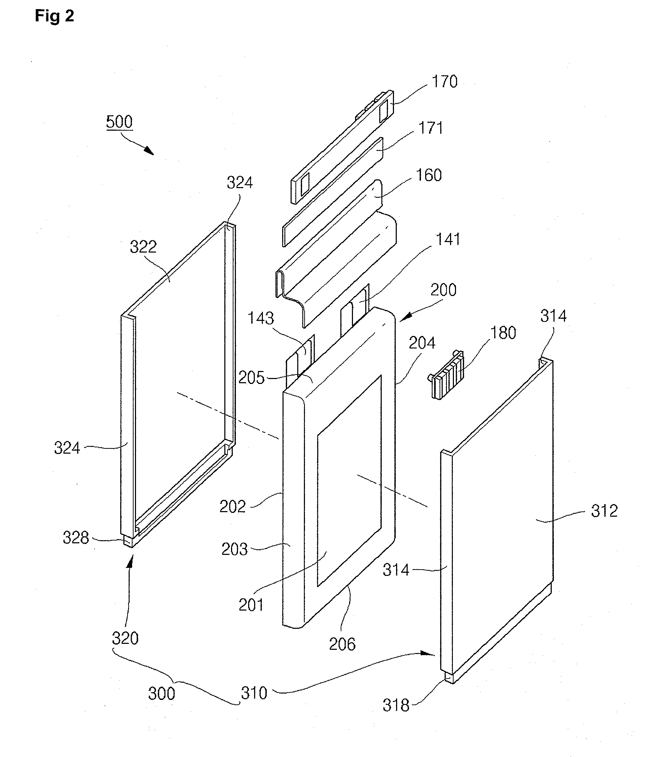

FIG. 1 is a diagram illustrating the assembly of a case 210 and an electrode assembly 150, according to an embodiment of the invention, and FIG. 2 is an exploded perspective view illustrating a battery pack 500, according to an embodiment of the invention.

As illustrated in FIGS. 1 and 2, the battery pack 500 includes a bare cell 200. The bare cell 200 includes: an electrode assembly 150 having first and second electrode plates 110 and 120 having positive and negative polarities, and a separator 130 interposed between the first and second electrode plates 110 and 120; and a case 210 housing the electrode assembly 150.The case 210 is pouch shaped and includes a deep drawing portion 210a, having a predetermined space in which the electrode assembly 150 is disposed.

The electrode assembly 150 has a stacked structure. The first and second electrode plates 110 and 120 are respectively coated with a positive active material and a negative active material. The separator 130 is interposed between the first and second electrode plates 110 and 120, to enable the movement of lithium ions while preventing a short circuit therebetween. The stacked structure is spirally wound. Electrode tabs 141 and 143 extend from the first and second electrode plates 110 and 120, respectively. The first electrode plate 110 may serve as a positive electrode, and the second electrode plate 120 may serve as a negative electrode.

A chalcogenide compound can be used as the positive electrode active material coated on the first electrode plate 110. For example, the positive electrode active material may be a composite metal oxide, such as, LiCoO₂, LiMn₂O₄, LiNiO₂, LiNi₁₋ₓCoₓO₂ (0 < X <1), or LiMnO₂.

The negative electrode active material, coated on the second electrode plate 120, can be, for example, a carbon-based material, Si, Sn, a tin oxide, a composite tin alloy, a transition metal oxide, or a lithium metal oxide. In general, the positive electrode plate is formed of aluminum, and the negative electrode plate is formed of copper. The separator is generally formed of polyethylene (PE) or polypropylene (PP), but the invention is not limited to the above-mentioned materials.

The case 210 has a space defined therein. The deep drawing portion 210a has a predetermined depth, to allow the electrode assembly 150 to be disposed therein. The case 210 has a flange 210b that is formed around the deep drawing portion 210a, to cover the deep drawing portion 210a. The case 210 is formed of a soft material, for example modified polypropylene, such as cast polypropylene (CPP). The case 210 includes an aluminum film and an adhesive layer disposed on one surface of the aluminum film. The case includes an insulating film that is formed on the other surface of the aluminum film. The insulating film is made of a resin material, such as, nylon or polyethylene-terephthalate (PET).

The first and second electrode tabs 141 and 143 are connected to the electrode assembly 150 and extend from the case 210 by a predetermined length. The bare cell 200, formed by putting the electrode assembly 150 into the case 210, is connected to a protection circuit board 170. The protection circuit board 170 is electrically connected to the electrode assembly 150. The protection circuit board 170 is to break the flow of current when the battery is erroneously operated.

An insulating member 160 is disposed upon the first and second electrode tabs 141 and 143 and extends from the case 210 to the outside. The protection circuit board 170 is electrically connected to the first and second electrode tabs 141 and 143, with the insulating member 160 interposed therebetween. The protection circuit board 170 is electrically connected to an external terminal 180 exposed to the outside through a connecting lead 171. The external terminal 180 is directly connected to an external electric terminal during charging.

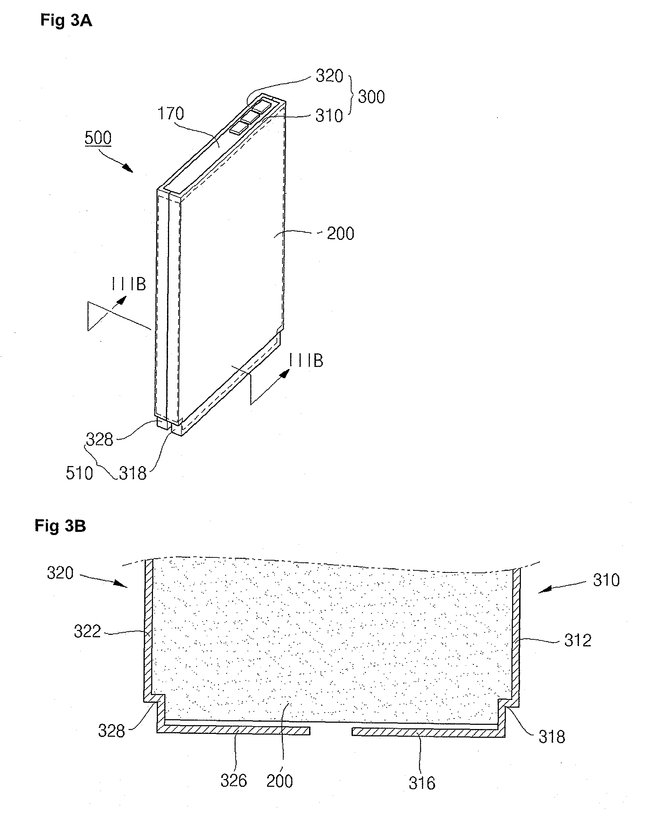

FIG. 3A is a perspective view illustrating an assembled battery pack 500 including an outer case 300, and FIG. 3B is a cross-sectional view taken along the line IIIB-IIIB of FIG. 3A. As illustrated in FIG. 2 and FIGS. 3A and 3B, the bare cell 200 is covered with the outer case 300. The outer case 300 includes first and second outer case portions 310 and 320 covering opposing surfaces of the bare cell 200. That is, the first outer case portion 310 covers a first surface 201 of the bare cell 200, and the second outer case portion 320 covers a second surface 202 of the bare cell 200. In addition, lateral surfaces 203 and 204, of the bare cell 200, are also covered with the first and second outer case portions 310 and 320.

The first and second outer case portions 310 and 320 have main surfaces 312 and 322, lateral surfaces 314 and 324 that are bent from the edges of the main surfaces 312 and 322 at right angles, and bottom surfaces 316 and 326 that are bent from lower parts of the main surfaces 312 and 322 and the lateral surfaces 314 and 324, respectively.

The outer case 300 has a recessed portion 510 disposed at an end, for example a bottom end, thereof. As used herein, the "bottom end" refers to a lower portion of the outer case as depicted in the drawing. However, a "bottom", a "bottom end", and a "bottom cover" as referred to herein, are used for convenience and can relate to either end of an apparatus. The recessed portion 510 has a perimeter that is less than a perimeter of the outer case 300 itself. Step portions 318 are formed at lower portions of the first outer case 310. The step portions 318 are disposed at the boundaries between the main surface 312, the lateral surface 314, and the bottom surface 316. Step portions 328 are formed at lower parts of the second outer case 320. The step portions 328 are boundaries between the main surface 322, the lateral surface 324, and the bottom surface 326. The step portions 318 and 328 can be disposed adjacent to one another to form the recessed portion 510. The step portions 318 and 328 reduce the length of the bottom surfaces 316 and 326 to less than the widths of the main surfaces 312 and 322, and the step portions 318 and 326 and reduce the widths of the bottom surfaces 316 and 326, to less than the widths of the lateral surfaces 314 and 324.

The first and second outer case portions 310 and 320, of the outer case 300, can be formed of a corrosion-resistant material, for example, stainless steel or plastic, but the material forming the first and second outer case 310 and 320 portions is not limited thereto.

The outer case 300 forms the majority of the external surface of the battery pack 500, with an upper surface 205 of the bare cell 200 connected to the protection circuit board 170, and a lower surface 206 of the bare cell 200 is disposed in opposition to the upper surface 205. The upper and lower surfaces 205 and 206 are molded from a resin material, by a hot-melting method.

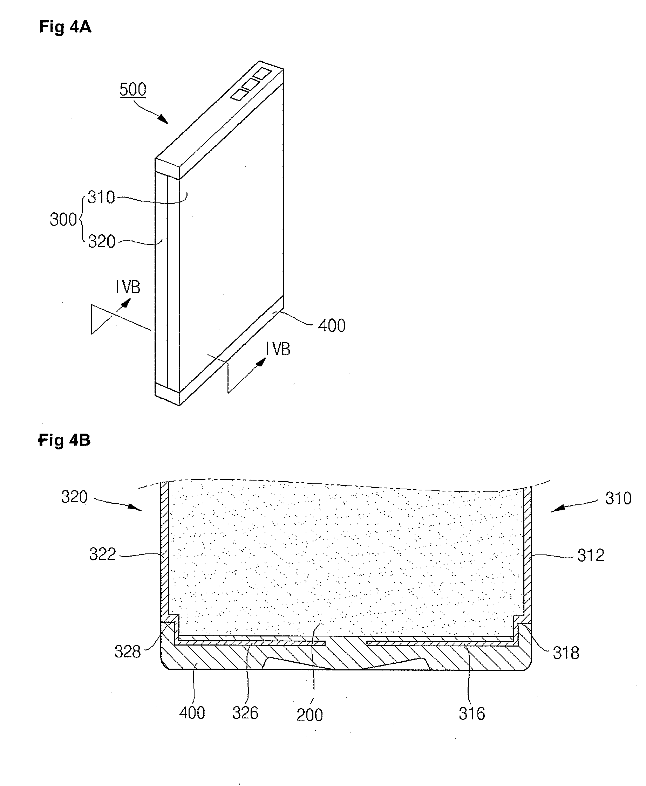

FIG. 4A is a perspective view illustrating the battery pack 500 including a bottom cover 400, and FIG. 4B is a cross-sectional view taken along the line IVB - IVB of FIG. 4A.As illustrated in FIGS. 4A and 4B, the bottom cover 400, which is a molded resin is formed by injecting a resin material onto the lower surface 206 of the bare cell 200, by a hot-melting method. The resin material can be injected between the first and second outer case portions 310 and 320, into a space between the bottom surfaces 316 and 328 and the bare cell 200. The resin material is applied to the step portions 318 and 328, of the first and second outer case portions 310 and 320. The injection of the resin material is controlled, such that the resin material does not overflow onto the main surfaces 312 and 322, or the lateral surfaces 314 and 324 of the first and second outer case portions 310 and 320.

In this way, the resin material is filled into the step portions 318 and 328, formed at the lower portion of the outer case 300, to form the bottom cover 400. The step portions 318 and 328 of the outer case 300 serve as coupling portions for stably coupling with the bottom cover 400.

FIG. 3B is a cross-sectional view illustrating the battery pack 500 before the bottom cover 400 is coupled, and FIG. 4B is the battery pack 500 after the bottom cover 400 is coupled. As can be seen from the comparison between FIG. 3B and FIG. 4B, the perimeter of the bottom cover 400 is equal to or less than the perimeter of the outer case 300 and/or perimeter of the battery pack 500 from increasing. A thickness (the distance between the main surfaces 312 and 322) of the outer case 300 can be equal to or less than a related thickness of the bottom cover 400. A width (a distance between the lateral surfaces 314 and 324) of the outer case 300 can be equal to or less than a related width of the bottom cover 400.

As described above, the molding of the bottom cover 400 is performed by filling the step portions 318 and 328, of the outer case 300, with a resin material. That is, since the bottom cover 400 is coupled to the step portions 318 and 328, so as to surround the lower part of the outer case 300, the bottom cover 400 is strongly coupled to the bare cell 200 and the outer case 300.

In the above-described embodiment, a pouch-shaped case has been described, but the invention is not limited thereto. For example, the bare cell may be put into a square-shaped outer case, and the bottom cover may be coupled to the square-shaped outer cover. In this case, the same effects and operations as described above are also obtained.

As described above, according to the battery pack according to the embodiment of the invention, a resin material is filled into lower portions of the outer case, to form a bottom cover having a perimeter equal to less than the perimeter of the outer case, and the bottom cover is molded to the outer case so as to reduce the overall thickness of the battery pack.

Further, according to the above-described embodiment of the invention, the bottom cover is coupled to the outer case so as to fill up the step portions formed at the lower parts of the outer case, which makes it possible to prevent the bottom cover from being easily detached from the bare cell and the outer case. Thus, the bottom cover is strongly fixed to the bare cell and the outer case.

Although a few embodiments of the present invention have been shown and described, it would be appreciated by those skilled in the art that changes may be made in this embodiment without departing from the principle of the invention, the scope of which is defined in the claims.

## Claims

1. A battery pack including:
a bare cell comprising:
an electrode assembly housed within an inner case;
an outer case having a main body and a first end, said outer case being
disposed around the bare cell;
and a cover molded to and surrounding said first end,
wherein the length of the perimeter of the cover is equal to or less than the length of the perimeter of the main body.

2. The battery pack as claimed in claim 1, wherein the first end of the outer case is defined by a recessed portion extending from the main body, the cover being disposed around the recessed portion.

3. The battery pack as claimed in claim 2, wherein the recessed portion of the outer case comprises step portions that inwardly narrow the outer case.

4. The battery pack as claimed in claim 3, wherein the step portions are disposed adjacent to a first end of the bare cell.

5. The battery pack as claimed in any preceding claim, wherein the main body of the outer case has a first perimeter and the recessed portion has a second perimeter, the length of the perimeter of the recessed portion being less the length of the perimeter of the main body.

6. The battery pack as claimed in any preceding claim, wherein the outer case comprises a first outer case portion covering a first surface of the bare cell and portions of two lateral surfaces of the bare cell, and a second outer case portion covering a second surface of the bare cell and portions of the two lateral surfaces of the bare cell.

7. The battery pack as claimed in any preceding claim, wherein the outer case is formed of a corrosion-resistant material.

8. The battery pack as claimed in any preceding claim, wherein the inner case is pouch shaped.

9. The battery pack as claimed in any preceding claim, wherein the outer case is rectangular.

10. The battery back as claimed in any preceding claim, wherein the cover is formed by injection molding a resin material.

11. The battery pack as claimed in any of claims 2 to 10, wherein the cover is formed by injecting a resin material into a space between a portion of the outer case and the bare cell, and into the recessed portion of the outer case.

12. The battery back as claimed in any preceding claim, wherein the case comprises cast polypropylene.

13. The battery pack as claimed in any preceding claim, wherein the cover is disposed in contact with the bare cell and the outer case.

14. The battery pack as claimed in any preceding claim, wherein the cover has a width and a thickness that are each equal to or less than a width and a thickness, respectively, of the main body of the outer case.

15. The battery pack as claimed in any preceding claim, wherein the electrode assembly comprises first and second electrode plates and a separator disposed between the first and second electrode plates.
